# EUROPEAN PATENT SPECIFICATION

(11) **EP 2 541 115 B1**
(45) Date of publication and mention of the grant of the patent: **05.08.2015**
(21) Application number: 11184923.8
(22) Date of filing: 12.10.2011
(51) Int. Cl.: F16L 11/118, F16L 11/127, F16L 11/16, F16L 9/12, F16L 9/16

(54) **Antistatic tube construction**
Antistatische Rohrkonstruktion
Construction de tuyau antistatique

(30) Priority: 30.06.2011 IT MI20111211
(43) Date of publication of application: 02.01.2013
(73) Proprietor: Merlett Tecnoplastic S.p.A., 21020 Daverio VA (IT)
(72) Inventor: Tamborini, Ariberto, 21020 Daverio (VA) (IT)
(74) Representative: Cicogna, Franco

(56) References cited:
- EP-A1- 0 252 338
- GB-A- 836 599
- US-A- 4 490 575
- US-A- 5 819 518
- US-A1- 2003 111 126
- US-A1- 2004 091 656
- US-B1- 6 305 428

## Description

### BACKGROUND OF THE INVENTION

The present invention relates to an antistatic tube construction.

As it is known, in industrial tubes designed for conveying, either by a drawing or a delivering pressing force, dry substances, surface electrostatic charges are generated hindering a proper dry substance conveying since said substances would tend to adhere to the inner walls of the tubes.

In extreme cases, moreover, the above electrostatic charges could become very dangerous, such as, for example, in mines, because of possible electric discharges or voltaic arches between a tube and equipments connected to said tube, thereby generating explosions.

Tube makers have overcome the above problem substantially in two ways.

A first system provides to arrange a conductive material layer within the tubes.

Such a conductive material may comprise blends or mixtures of synthetic resins filled-in by a conductive material such as carbon black or the like.

In this case, to discharge electrostatic charges, the tube must be connected by metal sleeve elements arranged therein, in turn connected, without any electric interruptions, to the apparatus casing and then to the earth, thereby assuring a sufficiently large contact surface between the sleeve elements and inner conductive inner layer.

Another system, which is the most commonly used and preferred one, is that of applying on the outer surface of the tube a metal conductor, such as a multipolar copper small cable.

In this case it is very simple and safe to connect the tubes to the ground since it is sufficient to take a portion of the small cable from the tube and connect it to the apparatus construction.

The electric cable, which represents a perfect electric conductor, would collect all surface charges formed by conveying the mentioned dry substances, thereby transferring to the earth said charges in a quick and safe manner.

In this connection it should be apparent that the shorter becomes the length of the electric cable, the larger will become the capability thereof of transferring to the earth undesired charges.

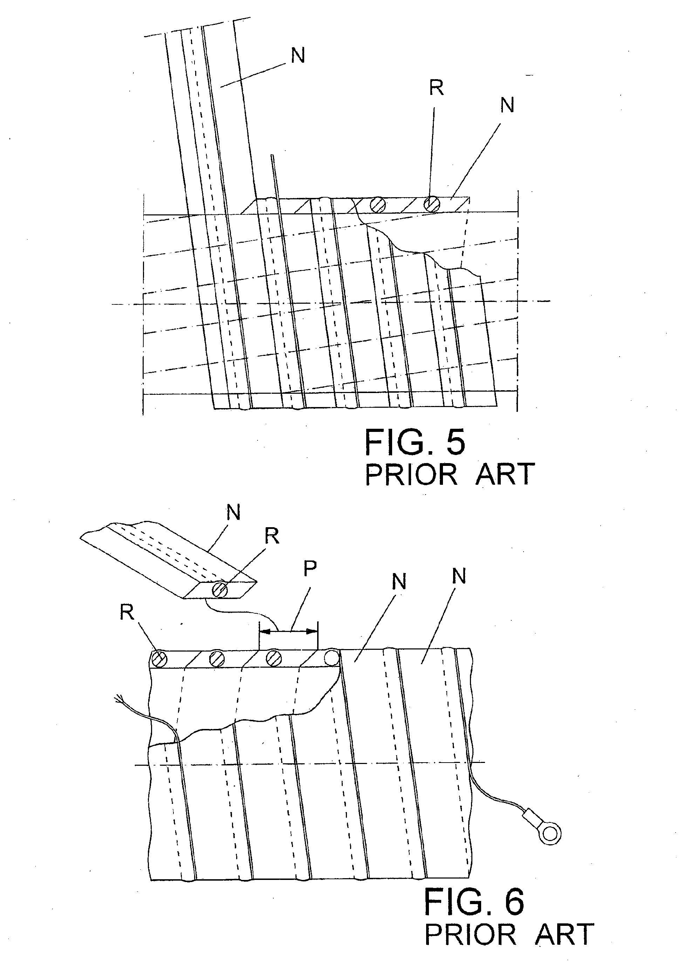

It is moreover known that coiled pipes, conventionally used in the above applications, are made on a mandrel, thereon is wound a plastics material strip N including in its inside a reinforcement rigid material R designed for providing the tube with a desired stiffness and strength, as schematically shown in figures 5 and 6 showing a prior such pipe or tube.

Thus, the conductive copper material is deposited on the surface of the tube as the latter is made, that is the molten strip material is deposited on the rotary mandrel by a spiral effect with a spiral winding pitch set by said mandrel.

Consequently, the copper conductive cable is wound and deposited on the tube with a pitch which is precisely equal to the tube spiral winding pitch.

By the above prior method, for each linear meter of the made tube, several meters of the above mentioned electric cables in a ratio established by the tube pitch, in turn established by the mandrel operating pitch will be deposited.

For example, for 1 m of a tube having an outer diameter 0 110 and a tube pitch of 10 mm, on the tube surface will be deposited about 34 m of above mentioned electric copper cable.

Thus, it should be apparent that the above method has two main drawbacks, that is: the cable inner resistance would be increased proportionately to the cable length and, accordingly, the cost of the copper material used for tube linear meter would also be greatly increased.

Moreover, if the length of the electric cable is directly related to the tube pitch, then by increasing the tube pitch, for example by doubling it, both the conductor cable length and its resistance will be brought to respective half values, thereby improving the conductivity properties of the assembly.

With reference to the same above example, the outer diameter being the same (110 mm), but the tube pitch being twice (20 mm), only 17 m of electric cable would be deposited.

However, by doubling, for example, the tube pitch, the compression strength of the tube would be correspondingly undesirably reduced.

Document US 5 819 518 discloses a flexible tube comprising a plurality of conductive coated wires spirally arranged with a given pitch and a plurality of reinforcement threads arranged on the outer surface of said conductive wires along a direction of the tube axis with a set spacing in the circumferential direction and an outer wall formed on the outside of the reinforcement wires. Portions of the conductive coated wires project in the circumferential outer direction and the outer surface of the tube wall is corrugated, the outer wall being formed by a plurality of strips made of a synthetic resin spirally wound with a pitch equal to that of the coated conductive wires.

### SUMMARY OF THE INVENTION

Accordingly, the aim of the present invention is to provide such an antistatic tube having a novel construction adapted to overcome the drawbacks and limitations of the above mentioned prior art.

Within the scope of that aim, a main object of the invention is to provide such an antistatic tube construction including a copper cable having a length much smaller than that of prior copper cables for the same applications.

Another object of the present invention is to provide such an antistatic tube construction allowing to greatly increase the dissipating capability of surface electrostatic charges.

Yet another object of the present invention is to provide such an antistatic tube construction having maximum mechanical strength properties.

Yet another object of the present invention is to provide such a cheap antistatic tube construction

Yet another object of the present invention is to provide such an antistatic tube construction which is very reliable and safe in operation.

According to one aspect of the present invention, the above mentioned aim and objects, as well as yet other objects, which will become more apparent hereinafter, are achieved by an antistatic tube construction, according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:
Figure 1 is a partially cross-sectioned side view of an antistatic tube construction according to the present invention;
Figure 2 is a further partially cross-sectioned side elevation view of an antistatic tube construction according to an example;
Figure 3 schematically shows a making step for making the antistatic tube construction shown in figure 1;
Figure 4 schematically shows yet another making step for making the antistatic tube construction shown in figure 2:
Figure 5 shows a tube made according to the prior art methods; and
Figure 6 schematically shows yet another making step for making a prior tube construction.

### DESCRIPTION OF THE PREFERRED EMBODIMENTS

With reference to the number references of the above mentioned figures, the antistatic tube construction according to the present invention, which has been generally indicated by the reference number 1, is made starting from a mandrel having a winding pitch different from that which is conventionally used in such an application.

In the herein shown examples, a winding pitch twice that a prior winding pitch is used, but any desired possible pitch variations may be provided within the inventive idea of the present invention.

More specifically, the invention involves the use of a specifically designed extruding die, having a die length adapted to extrude a strip 2 having a width corresponding to the novel winding pitch, but with the provision of rigid material enlarged reinforcement construction.

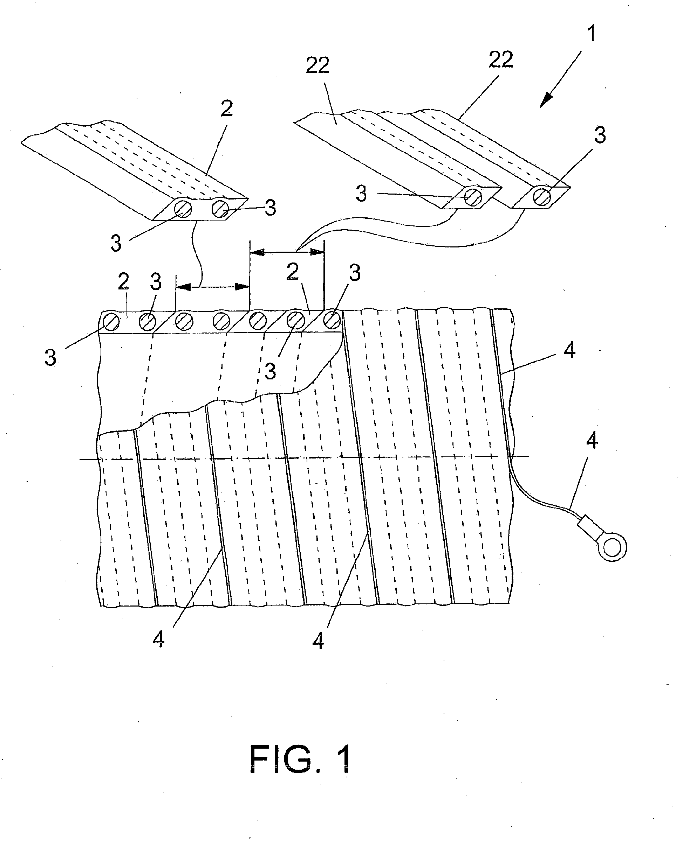

Figure 1 shows a strip 2 which is reinforced by two rigid material reinforcement or stiffening structures 3, the so-called reinforcement spiral or coil patterns.

The above mentioned spiral pattern 3 may also be made of two discrete die assemblies, generally schematically indicated by the reference number 22 in figure 1, which are coupled to one another as the tube is made.

In making the tube, a copper cable 4 is deposited on the tube surface, by following the double pitch of the product, that is for each two coils and not for a single one as in a prior tube.

Thus, a tube will be achieved having the same compression strength, owing to the provision of the double reinforcement spiral or coil pattern 3, while reducing to a half the length of the copper cable 4, with a corresponding reduction of the electric resistance and the copper wire cost.

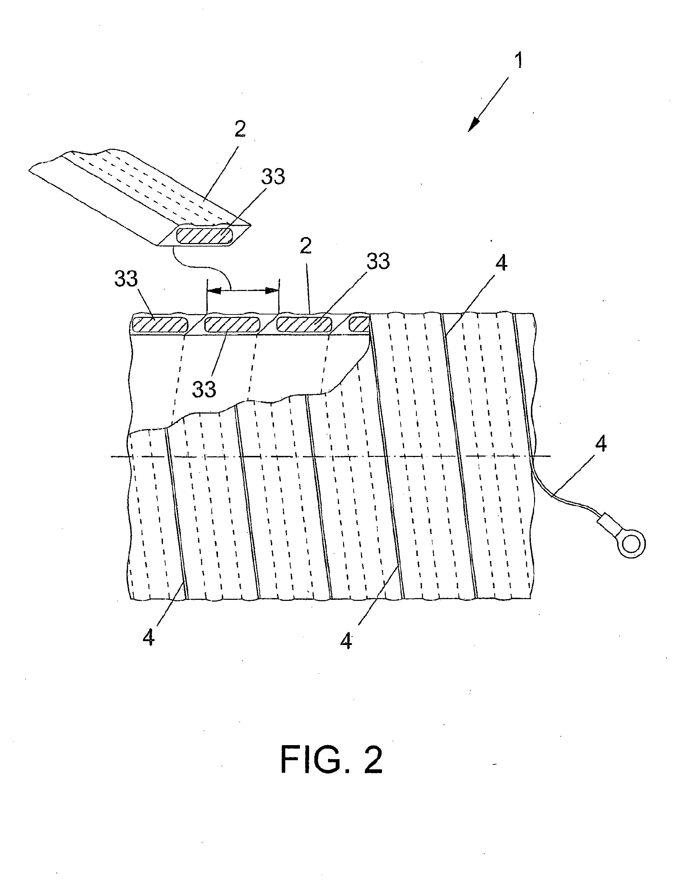

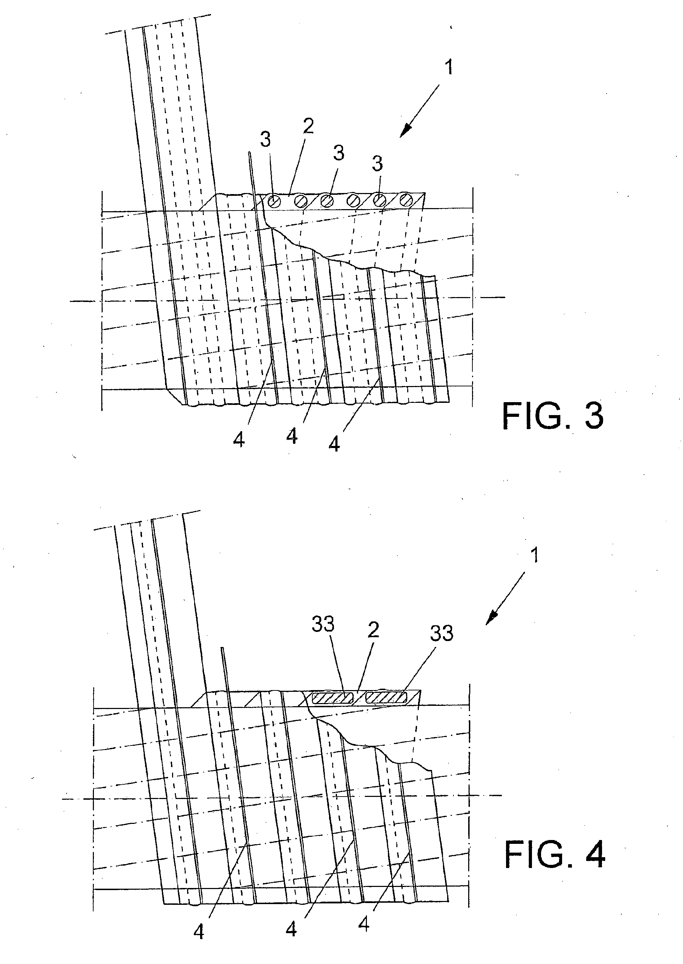

According to the invention, the tube forming strip construction holds therein two reinforcement patterns, or spiral or coil patterns having a circular configuration or other cross section, for example rectangular one, as it is schematically shown in figures 2 and 4, where an oval cross-section reinforcement element 33 is illustrated.

The materials forming said strip or construction may be of any desired materials, such PVC, polyurethane, or other thermoplastics materials.

The conductive or conductor wire or braid 4 may be made of copper or any other conductor materials such as aluminium, brass and so on.

The tube may have an end construction which may be either smooth or waved or corrugated.

It has been found that the invention fully achieves the intended aim and objects.

In fact, the invention has provided an antistatic tube construction so designed as to provide very advantageous construction properties such as the reduction of the copper cable length, the increase of the surface electrostatic charge dissipating capability, while holding the mechanical strength of the tube, which will consequently have a much smaller cost.

In practicing the invention, the used materials, as well as the contingent size, can be any, depending on requirements.

## Claims

1. A smooth or corrugated antistatic tube construction, said tube construction comprises a strip (2) spirally wound so as to form said tube, in said strip being embedded two rigid reinforcement elements (3, 33), spaced by a first set pitch from one another, a single conductive cable being spirally wound, **characterized in that** said conductive cable being wound with a second winding pitch, on the outer surface of the tube, said second pitch of said conductive cable being double than said first pitch of said reinforcement elements.

2. An antistatic tube construction, according to claim 1, **characterized in that** said reinforcement elements are made by two distinct die assemblies which are coupled to one another in forming said tube.

3. An antistatic tube construction, according to claim 1, **characterized in that** said reinforcement elements have a circular, rectangular or oval cross-section.

4. An antistatic tube construction, according to claim 1, **characterized in that** said strip is made of PVC, polyurethane or other thermoplastics material.

5. An antistatic tube construction, according to claim 1, **characterized in that** said conductive element or cable (4) is a thread or braid made of copper, or aluminium, or brass.

## Patentansprüche

1. Glatte oder geriffelte antistatische Röhrenkonstruktion, wobei die Röhrenkonstruktion einen Streifen (2) umfasst, der derart spiralförmig gewickelt ist, dass er die Röhre bildet, wobei in den Streifen zwei starre Verstärkungselemente (3, 33) eingebettet sind, die durch eine erste Sollsteigung voneinander beabstandet sind, und ein einzelnes, spiralförmig gewickeltes leitendes Kabel, **dadurch gekennzeichnet, dass** das leitende Kabel mit einer zweiten Wicklungssteigung auf der Außenfläche der Röhre gewickelt ist, wobei die zweite Steigung des leitenden Kabels das Doppelte der ersten Steigung der Verstärkungselemente beträgt.

2. Antistatische Röhrenkonstruktion nach Anspruch 1, **dadurch gekennzeichnet, dass** die Verstärkungselemente aus zwei einzelnen Formanordnungen bestehen, die zum Bilden der Röhre miteinander verbunden sind.

3. Antistatische Röhrenkonstruktion nach Anspruch 1, **dadurch gekennzeichnet, dass** die Verstärkungselemente einen runden, rechteckigen oder ovalen Querschnitt aufweisen.

4. Antistatische Röhrenkonstruktion nach Anspruch 1, **dadurch gekennzeichnet, dass** der Streifen aus PVC, Polyurethan oder anderen Thermoplastmaterialien besteht.

5. Antistatische Röhrenkonstruktion nach Anspruch 1, **dadurch gekennzeichnet, dass** das leitende Element oder Kabel (4) ein Strang oder eine Litze ist, die aus Kupfer, Aluminium oder Messing besteht.

## Revendications

1. Construction de tube antistatique lisse ou ondulé, ladite construction de tube comprenant une bande (2) enroulée en spirale de manière à former ledit tube, deux élément de renforcement (3, 33) rigides étant noyés dans ladite bande, espacés l'un de l'autre de l'ordre d'un premier pas réglé, une unique tresse conductrice ou un unique câble conducteur étant enroulé(e) en spirale, **caractérisée en ce que** ledit câble conducteur est enroulé avec un deuxième pas d'enroulement sur la surface extérieure du tube, ledit deuxième pas dudit câble conducteur étant le double dudit premier pas desdits éléments de renforcement.

2. Construction de tube antistatique selon la revendication 1, **caractérisée en ce que** lesdits éléments de renforcement sont formés grâce à deux assemblages de filière distincts qui sont couplés l'un à l'autre en formant ledit tube.

3. Construction de tube antistatique selon la revendication 1, **caractérisée en ce que** lesdits éléments de renforcement ont une section transversale circulaire, rectangulaire ou ovale.

4. Construction de tube antistatique selon la revendication 1, **caractérisée en ce que** ladite bande se compose de PVC, de polyuréthane ou d'un autre matériau thermoplastique.

5. Construction de tube antistatique selon la revendication 1, **caractérisée en ce que** ledit élément ou câble conducteur (4) est un fil ou une tresse se composant de cuivre, d'aluminium ou de laiton.
